# EUROPÄISCHE PATENTSCHRIFT

(11) **EP 0 666 328 B1**
(45) Veröffentlichungstag und Bekanntmachung des Hinweises auf die Patenterteilung: **11.11.1998**
(21) Anmeldenummer: 94810061.5
(22) Anmeldetag: 07.02.1994
(51) Int. Cl.: C22B 21/00

(54) **Verfahren und Vorrichtung zur umweltgerechten Rückgewinnung von Aluminium aus Abfällen**
Method and apparatus for non-polluting recuperation of aluminium from scrap
Procédé et appareil de récupération non polluant d'aluminium à partir de déchets

(43) Veröffentlichungstag der Anmeldung: 09.08.1995
(73) Patentinhaber: ALUMINIUM RHEINFELDEN GmbH, 79618 Rheinfelden (DE)
(72) Erfinder: Franke, Alois, D-79618 Rheinfelden (DE)
(74) Vertreter: Patentanwälte Breiter + Wiedmer AG

(56) Entgegenhaltungen:
- EP-A- 0 050 795
- EP-A- 0 068 901
- EP-A- 0 314 404
- EP-A- 0 486 759
- DE-A- 2 361 428
- US-A- 4 060 408
- US-A- 4 523 949

## Beschreibung

Die Erfindung betrifft ein Verfahren zur umweltgerechten Rückgewinnung von Aluminium und Aluminiumlegierungen aus mit organischen Verbindungen behafteten Materialien durch Umschmelzen in einem Schmelzherd und Reinigung der Rauchgase. Im Rahmen der Erfindung liegt weiter eine zur Durchführung des Verfahrens geeignete Hochleistungsschmelzanlage.

Bekannte Verfahren zur Rückgewinnung von Aluminium aus Abfällen benutzen Salztrommelöfen oder Mehrkammerherdöfen, denen jeweils eine Abfallaufbereitung vorgeschaltet ist. All diesen Verfahren ist gemeinsam, dass ihre Dioxin- und Furanemission -- angegeben als Summenwert nach dem im Anhang zur 17. Verordnung zur Durchführung des Bundes-Immissionsschutzgesetzes der Bundesrepublik Deutschland (17. BIMSchV) festgelegten Verfahren -- ohne Verdünnung den dort definierten Grenzwert von 0,1 ng/m³ in der Regel überschreitet. Allenfalls kann dieser Grenzwert durch die Anwendung eines Aktivkohlefilters erreicht werden, welcher seinerseits dann mit Dioxinen und Furanen belastet ist. Auch Filterstäube sind bei diesen Verfahren mit Dioxinen und Furanen behaftet.

Bei Mehrkammerherdöfen nach dem Stand der Technik werden die mit organischen Stoffen behafteten Aluminiumabfälle vorgängig zur Aufgabe in den Schmelzherd in eine Schwelkammer oder Schweltrommel chargiert, in der bei ca. 450°C Kunststoff vergast, lackiertes Aluminium entlackt, Papier verkokt, Oele und Emulsionen vergast und Wasser verdampft wird. Das Dioxine und Furane enthaltende Schwelgas wird in der Regel als Energieträger für die Erzeugung und Aufrechterhaltung der Aluminiumschmelze verwendet. Von oekologischem Nachteil ist dabei, dass die während des Schwelvorganges temperaturbedingt stattfindende Dioxin- und Furanbildung nicht nur das Schwelgas belastet, sondern auch die Schwelkammer und die Aluminiumabfälle kontaminieren kann. Zudem erfordert der Chargenprozess eine periodische Oeffnung der Schwelkammer zum erneuten Chargieren organisch behafteter Aluminiumabfälle. Das Arbeiten an der mit Dioxinen und Furanen potentiell kontaminierten Schwelkammer bedingt demzufolge sorgfältige Arbeitsschutz- und Umweltschutzvorkehrungen, um toxische Belastungen zu vermeiden.

Angesichts dieser Gegebenheiten hat sich der Erfinder die Aufgabe gestellt, ein Verfahren sowie eine Hochleistungsschmelzanlage zu schaffen, bei denen ein separater Schwelvorgang und die mit ihm verbundenen oekologischen Probleme vermieden werden können.

Zur erfindungsgemässen Lösung der Aufgabe führt beim Verfahren, dass die mit organischen Verbindungen behafteten Materialien in kompaktierter Form direkt in einen im Schmelzherd angeordneten Schwelkanal eingeführt werden und diesen vor dem Eintauchen in die Metallschmelze während einer Zeitdauer von mindestens 3 min durchwandern, wobei die Ofenraumtemperatur des Schmelzherdes mindestens 1200°C beträgt, die Rauchgase während einer Verweilzeit von mindestens 5 sec bei dieser Temperatur gehalten und nach deren Austritt aus dem Schmelzherd auf eine Temperatur von weniger als 100°C abgeschreckt werden.

Durch die Einhaltung der erwähnten Verfahrensparameter wird einerseits sichergestellt, dass die während des Umschmelzvorgangs durch Zersetzung der den Abfällen aus Aluminium anhaftenden organischen Verbindungen entstehenden Dioxine und Furane durch die nachfolgende Hochtemperaturbehandlung zerstört werden und andererseits das Abschrecken der heissen Abgase die Rekombination zu Dioxinen und Furanen verhindert. Mit der direkten Einführung von kompaktierten Aluminiumabfällen in den Schmelzherd entfällt die Vorbehandlung in einer gesonderten Schwelkammer, da der Dioxine und Furane bildende Schwelvorgang erfindungsgemäss in den Ofenraum verlegt ist. Die Zeitdauer von mindestens 3 min, während der die Aluminiumabfälle in kompaktierter Form vor dem Eintauchen in den Metallsumpf innerhalb eines Schwelkanals in dem auf eine Temperatur von mindestens 1200°C aufgeheizten Ofenraum gehalten werden, ist so gewählt, dass die Verschwelung beim Eintauchen in den Metallsumpf grossenteils abgeschlossen ist.

Die Aufrechterhaltung einer Temperatur von mindestens 1200°C wird am geeignetsten durch die Verbrennung des Schwelgases und ggf. zusätzlicher Energieträger (z.B. Heizöl oder Erdgas) erreicht, wobei als Oxidans reiner Sauerstoff in den Ofenraum eingedüst wird. Um einen Austritt von Ofengasen in die Fabrikhalle zu vermeiden, wird der Ofenraum auf Unterdruck geregelt.

Aus Sicherheitsgründen ist es angezeigt, in der Ofenatmosphäre mit Sauerstoffüberschuss zu arbeiten. Hierzu wird der Sauerstoff in einer zur Aufrechterhaltung einer Ofenatmosphäre mit Sauerstoffüberschuss ausreichenden Menge eingedüst.

Das Abschrecken der Rauchgase nach Verlassen des Schmelzherdes wird bevorzugt mit Wasser durchgeführt.

Eine zur Durchführung des erfindungsgemässen Verfahrens geeignete Hochleistungsschmelzanlage mit einem Schmelzherd zeichnet sich erfindungsgemäss dadurch aus, dass innerhalb des Schmelzherdes ein rohrförmiger Schwelkanal aus feuerfestem Werkstoff mit einer von ausserhalb des Schmelzherdes zugänglichen Eintrittsöffnung zur Einführung der vorgepressten Materialien in den Schwelkanal und einer gegenüber der Eintrittsöffnung tiefer liegenden Austrittsöffnung in Bodennähe des Schmelzherdes angeordnet und die Eintrittsöffnung zumindest zeitweise mit einem Stopfkanal in Verbindung bringbar ist.

Zweckmässigerweise ist der Eintrittsöffnung des Schwelkanals eine Presse mit dieser zugehörigem Stopfkanal zugeordnet, wobei der Stopfkanal zum wechselweisen Pressen und Transportieren der Materialien mit einer verschiebbaren Gegenpressplatte mit einer in dieser vorgesehenen Oeffnung jeweils entsprechend geschlossen bzw. geöffnet werden kann.

Damit das Schwelgas in den Ofenraum entweichen und durch Verbrennung Energie für den Schmelzprozess des Aluminiums liefern kann, können im Schwelkanal oberhalb des maximalen Metallstandes Entgasungslöcher vorgesehen sein.

Zur kontinuierlichen Metallbehandlung und zur Aufrechterhaltung der Zirkulation des flüssigen Metalls stehen mit dem Schmelzherd bevorzugt eine Flux Bay sowie eine Pumpkammer mit einer Metallpumpe in Verbindung. Zur Entnahme von flüssigem Metall ist zweckmässigerweise am tiefsten Punkt der Flux Bay eine Abstichöffnung angeordnet.

Bei einer bevorzugten Ausgestaltung der erfindungsgemässen Hochleistungsschmelzanlage ist die Flux Bay mit einem hochfahrbaren Deckel verschlossen, wobei am Deckel bevorzugt diesen durchdringende rotierende Impeller festgelegt sind, die zusammen mit dem Deckel hochfahrbar sind. Zusätzlich ist die Flux Bay vom Schmelzherd bevorzugt mittels einer absenkbaren Tauchwand abtrennbar ausgestaltet.

Zum Abschrecken der aus dem Schmelzherd austretenden Rauchgase ist dem Schmelzherd bevorzugt eine Quenche nachgeschaltet.

Ueblicherweise werden die Aluminiumabfälle vor der Beschickung der Presse zerkleinert, mit geeigneten Verfahren nach Dichte sortiert und/oder durch Magnetabscheidung von Eisenteilen befreit.

Gegenüber den vorbekannten Verfahren lassen sich die Vorteile des erfindungsgemässen Verfahrens sowie der erfindungsgemässen Hochleistungsschmelzanlage wie folgt zusammenfassen:
1. Verminderung der Kontaminierungsmöglichkeiten mit Dioxinen und Furanen
   Mit der Einführung von Aluminiumabfällen in kompaktierter Form direkt in den Schmelzherd kann die Kontaminierung von Gerätschaften mit Dioxinen und Furanen auf ein Minimum reduziert werden.
2. Zerstörung eventuell vorhandener Dioxine und Furane im Schmelzherd
   Durch die Eindüsung von reinem Sauerstoff wird die Temperatur im Schmelzherd auf 1200°C erhöht und der Abgasvolumenstrom im Vergleich zum Luftbrenner reduziert. Dies erhöht die Verweilzeit des Abgases im Ofenraum. Vorhandene Dioxine und Furane werden zerlegt. Gleichzeitig wird die NOₓ-Bildung soweit verhindert, dass der Emissionsgrenzwert von 250 mg/Nm³ sicher unterschritten wird.
3. Vermeidung der Neubildung von Dioxinen und Furanen
   Durch die unmittelbare Ueberführung der Ofenabgase in eine Quenche wird die Neubildung von Dioxinen und Furanen vermieden und der Emissionsgrenzwert von 0,1 ng/Nm³ sicher unterschritten.

Weitere Vorteile, Merkmale und Einzelheiten der Erfindung ergeben sich aus der nachfolgenden Beschreibung eines bevorzugten Ausführungsbeispiels sowie anhand der Zeichnung; diese zeigt in
- Fig. 1 die Draufsicht auf eine teilweise geschnittene Hochleistungsschmelzanlage;
- Fig. 2 einen Schnitt durch die Anlage von Fig. 1 gemäss deren Linie A-A;
- Fig. 3 einen Schnitt durch die Anlage von Fig. 1 gemäss deren Linie B-B;
- Fig. 4 einen Schnitt durch die Anlage von Fig. 1 gemäss deren Linie C-C;
- Fig. 5 einen Schnitt durch die Anlage von Fig. 1 gemäss deren Linie D-D;
- Fig. 6 einen Schnitt durch die Anlage von Fig. 1 gemäss deren Linie E-E;
- Fig. 7 einen Schnitt durch die Anlage von Fig. 1 gemäss deren Linie F-F;
- Fig. 8 die teilweise geschnittene Seitenansicht der Anlage von Fig. 1 in Blickrichtung y;
- Fig. 9 das Abgasschema der Anlage von Fig. 1.

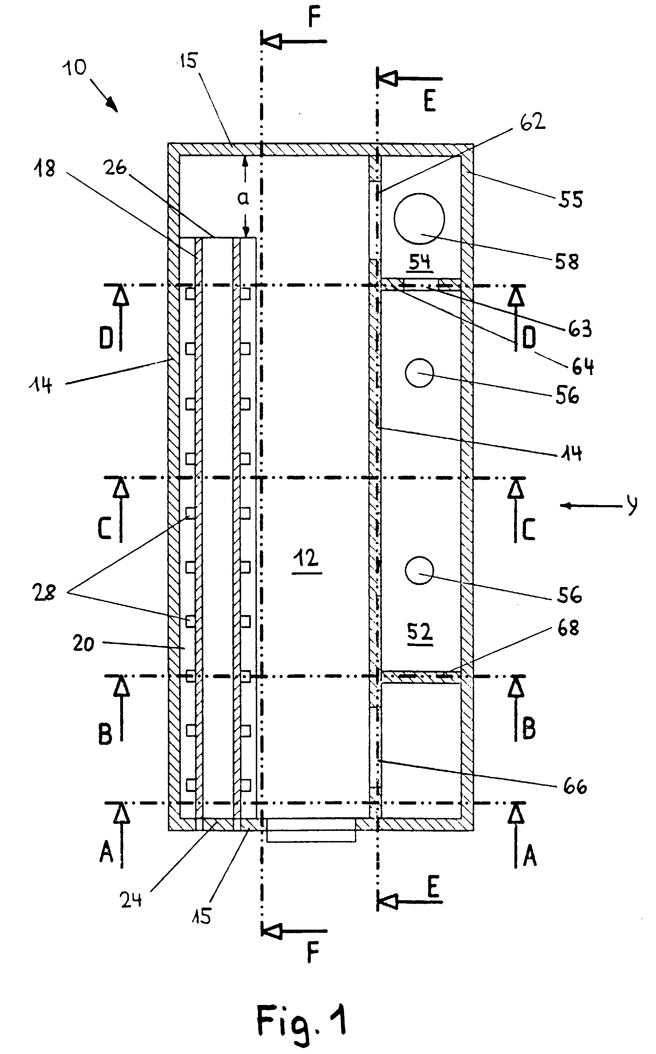

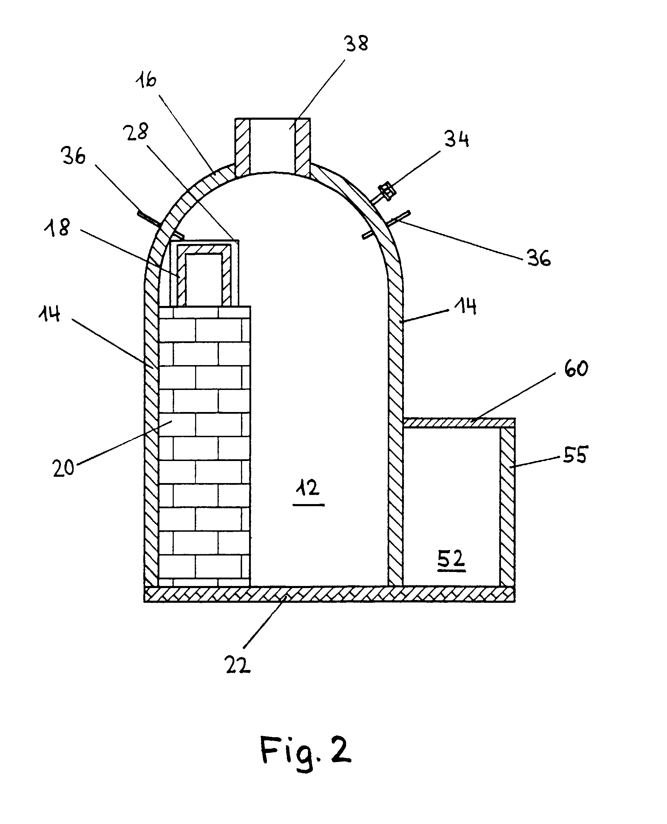

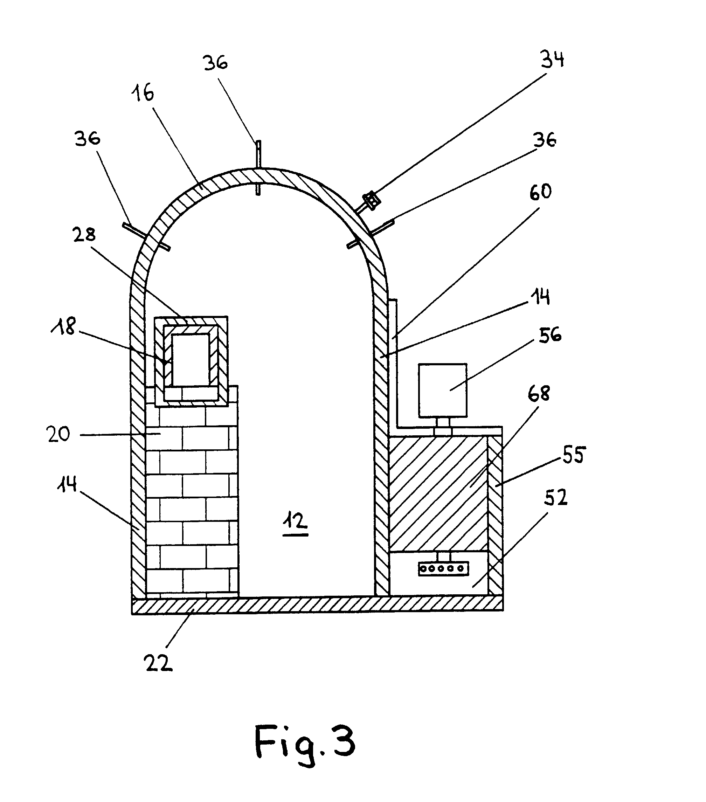

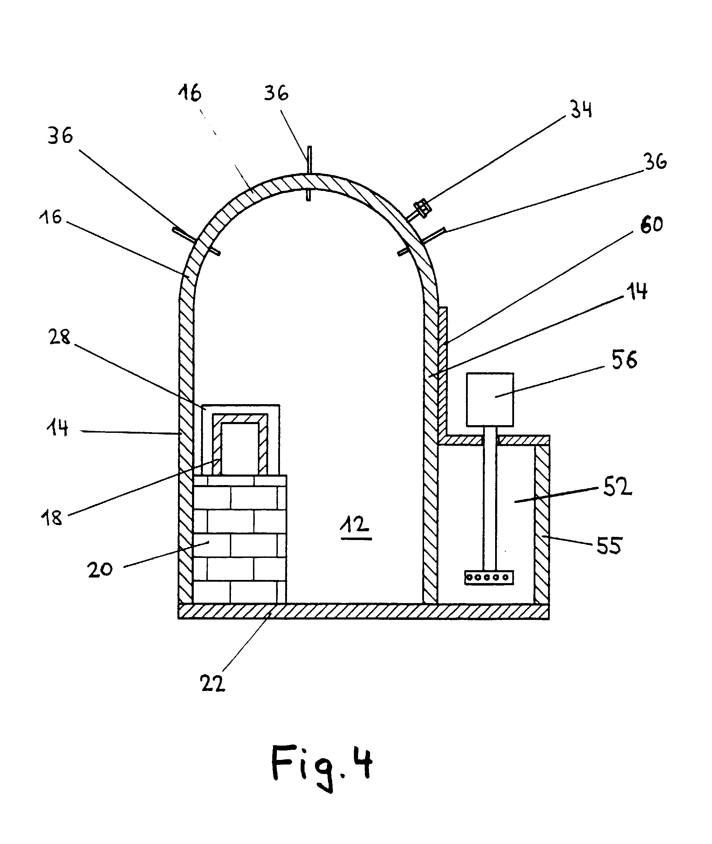

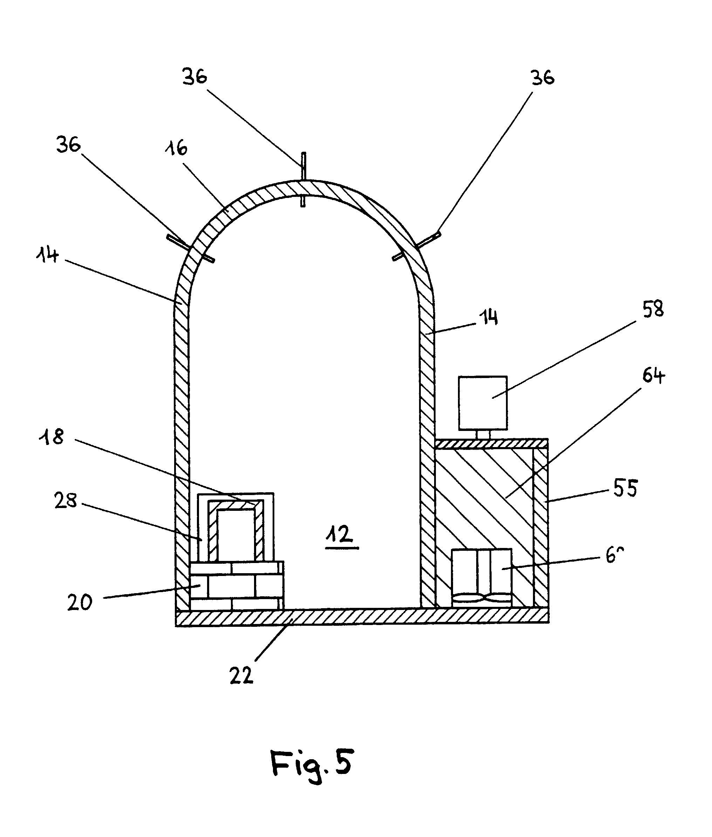

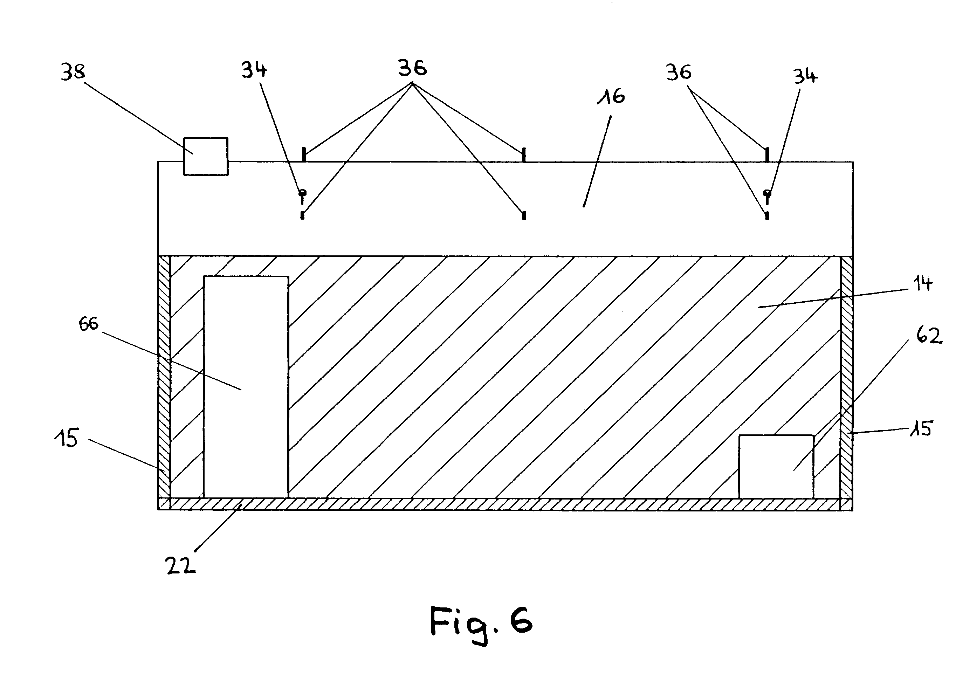

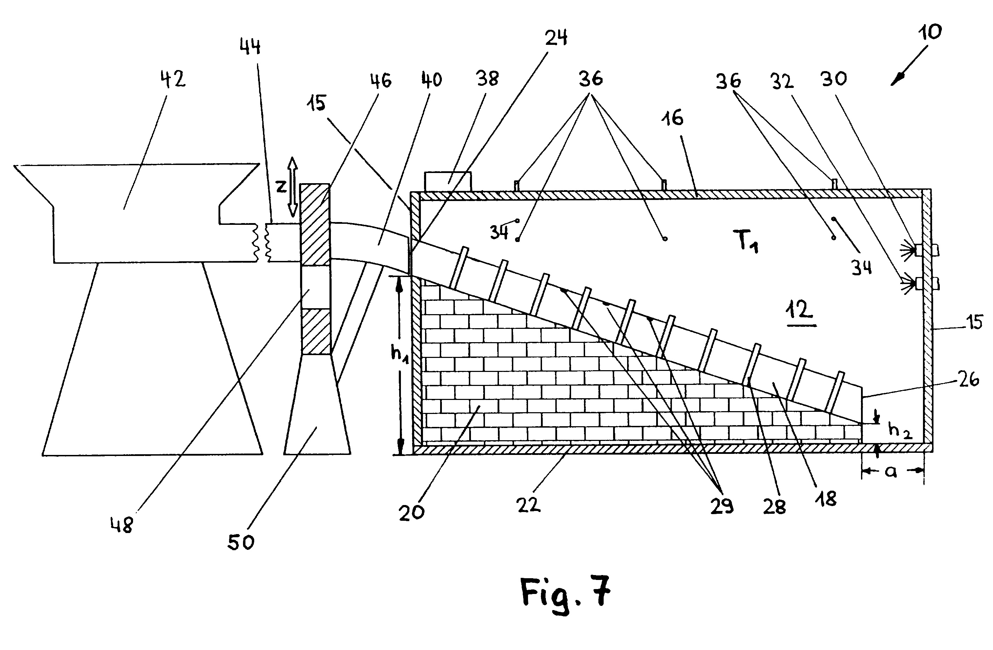

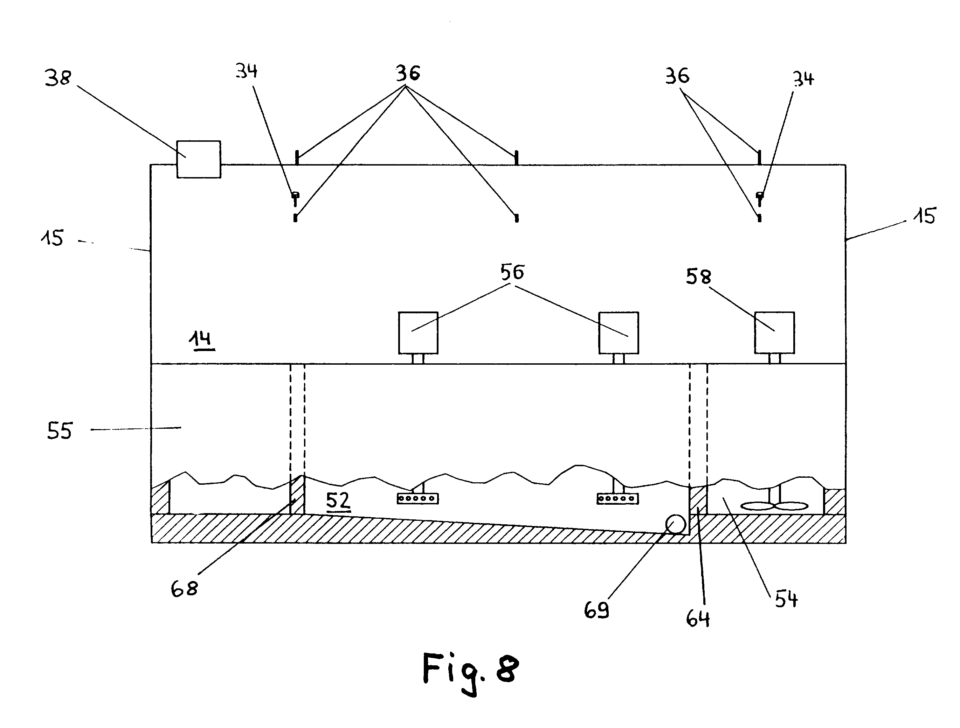

Eine in Fig. 1 bis 8 schematisch dargestellte, gegenüber der Aussenatmosphäre geschlossene Hochleistungsschmelzanlage 10 umfasst einen Schmelzherd 12 mit von einem Herdboden 22 aufragenden längs- und stirnseitigen Ofenwänden 14, 15 und einem den Schmelzraum abschliessenden Gewölbe 16. Im Innern des Schmelzherdes 12 verläuft entlang einer der längsseitigen Ofenwände 14 ein geschlossener Schwelkanal 18 aus einem feuerfesten Material wie beispielsweise Siliziumkarbid (SiC), der über Verankerungen 28 auf einem Feuerfest-Mauerwerk 20 festgelegt ist. Der Schwelkanal 18 weist auf der einen Seite eine in einer der stirnseitigen Ofenwände 15 in einer Höhe h₁ über dem Herdboden 22 am Fuss des Gewölbes 16 angeordnete Eintrittsöffnung 24 auf, verläuft auf dem Mauerwerk 20 schräg nach unten und endet in einer Austrittsöffnung 26 in einer Höhe h₂ über dem Herdboden 22 in einem Abstand a von der gegenüberliegenden stirnseitigen Ofenwand 15.

Auf der Höhe der Eintrittsöffnung 24 des Schwelkanals 18 ragen durch die gegenüberliegende stirnseitige Ofenwand 15 eine Sauerstoffdüse 30 sowie eine Erdgasdüse 32 in den Schmelzherd 12 ein. An verschiedenen Stellen des Gewölbes 16 sind in den Schmelzherd 12 gerichtete Sauerstoffsonden 34 und Temperaturfühler 36 angeordnet. Aus Sicherheitsgründen wird in der Ofenatmosphäre mit Sauerstoffüberschuss gearbeitet. Zu diesem Zweck wird ein Teilstrom des Ofengases in einer der Sauerstoffsonden 34 -- z.B. eine galvanische Sauerstoffkonzentrationszelle auf der Basis eines Oxidionen leitenden Festelektrolyten -- kontinuierlich analysiert und mit dem Messignal die Sauerstoffdüse 30 gesteuert. Für den Fall, dass der Aluminiumabfall zuwenig Schwelgas liefert, wird über die Erdgasdüse 32 ein flüssiger oder gasförmiger Energieträger (z.B. Heizöl oder Erdgas) eingedüst. Ueber die Temperaturfühler 36 im Gewölbe 16 wird die Erdgas-/Heizöleindüsung geregelt und hierbei die Ofenraumtemperatur T₁ über 1200°C gehalten.

Im Bereich der stirnseitigen Ofenwand 15 mit der Eintrittsöffnung 24 für den Schwelkanal 18 ist im Scheitelpunkt des Gewölbes 16 ein mit einem Abluftventilator in Verbindung stehender Abgasstutzen 38 aufgesetzt. Ueber einen Druckdifferenzmesser Ofenraum/Umgebung wird der Abluftventilator derart gesteuert, dass im Ofenraum ständig Unterdruck herrscht.

Ausserhalb des Schmelzherdes 12 befindet sich eine Presse 42 mit angegliedertem Stopfkanal 44. Während des Stopfens eines Schrottpakets ist der Stopfkanal einseitig von einer in Vertikalrichtung z verfahrbaren Stahlplatte 46 verschlossen, wobei die Stahlplatte 46 über einen Lagerbock 50 als Widerlager dient. Nach dem Stopfvorgang wird durch Verfahren der Stahlplatte 46 in Vertikalrichtung z über eine in der Stahlplatte 46 angeordnete Oeffnung 48 eine Verbindung zwischen dem Stopfkanal 44 und einem zwischen der Stahlplatte 46 und der Eintrittsöffnung 24 des Schwelkanals 18 angeordneten Mundstück 40 in Form eines Stahlkanals hergestellt. Jedes Schrottpaket hat im kompaktierten Zustand etwa ein Drittel der Länge des Schwelkanals 18. Nach Verfahren der Stahlplatte 46 schiebt die Presse 42 das gestopfte Schrottpaket in das Mundstück 40 und weiter über die Eintrittsöffnung 24 in den Schwelkanal 18. Durch das Auffedern des Schrottpaketes nach Einstossen in den Schwelkanal 18 wird dieser zur Stopfseite hin gegen austretendes Gas gedichtet. An der gegenüberliegenden Ofenwand mündet der Schwelkanal 18 im Metallsumpf.

Nach erfolgtem Einschieben eines Schrottpakets in den Schwelkanal 18 wird jeweils das nächste Schrottpaket gestopft und anschliessend in den Schwelkanal 18 geschoben. Während des Betriebs der Hochleistungsschmelzanlage 10 ist somit der Schwelkanal 18 ständig mit Aluminiumabfällen gefüllt. Der kompaktierte Aluminiumschrott wird entsprechend der jeweils neu in den Schwelkanal 18 eingeschobenen Menge über die Austrittsöffnung 26 in den Metallsumpf gestossen und dort im flüssigen Metall aufgeschmolzen.

Durch Entgasungslöcher 29 im Schwelkanal 18 oberhalb des maximalen Metallstandes kann das Schwelgas in den Ofenraum entweichen und durch Verbrennung Energie für den Schmelzprozess des Aluminiums liefern. Da der Schwelkanal 18 über die Verankerungen 28 im Feuerfest-Mauerwerk 20 verankert ist, können die vom Stopfvorgang herrührenden Längs- und Beulkräfte problemlos aufgenommen werden.

Ausserhalb des eigentlichen Schmelzherdes 12 ist an der Aussenseite der zum Schwelkanal 18 entfernteren längsseitigen Ofenwand 14 eine Flux Bay (schmelzebehandlungstrog) 52 sowie eine an diese anschliessende Pumpkammer 54 angeordnet. Die Flux Bay 52 sowie die Pumpkammer 54 sind parallel zum Schmelzherd geführt, durch eine Aussenwand 55 begrenzt und mit einem Deckel 60 abgedeckt. In die Flux Bay 52 ragen durch den Deckel 60 hindurchgeführte rotierende Impeller 56 ein, die zusammen mit dem Deckel 60 der Flux Bay 52 hochgefahren werden können. Die Pumpkammer 54 ist gegenüber der Austrittsöffnung 26 des Schwelkanals 18 angeordnet und über eine bodennahe Durchtrittsöffnung 62 in der längsseitigen Ofenwand 14 mit dem Schmelzherd 12 verbunden. In die Pumpkammer 54 ragt eine leistungsfähige Zentrifugalpumpe 58 ein. Die Pumpkammer 54 ist von der Flux Bay 52 durch eine Trennwand 64 mit bodennaher Durchtrittsöffnung 63 getrennt. Am der Pumpenkammer 54 entgegengesetzten Ende der Flux Bay 52 ist über eine Verbindungsöffnung 66 in der längsseitigen Ofenwand 14 eine Verbindung zwischen dem Schmelzherd 12 und der Flux Bay 52 hergestellt. Ueber eine absenkbare Tauchwand 68 kann die Flux Bay 52 zudem vom Schmelzherd 12 abgetrennt werden. Ueber die rotierenden Impeller 56 in der Flux Bay 52 wird ein Chlor-/Argongemisch ins strömende Flüssigmetall eingedüst, um die mit dem Schrott eingebrachten Oxide zu verschlacken. Um das Flüssigmetall abzukrätzen, wird der Deckel 60 der Flux Bay 52 mitsamt den Impellern 56 hochgefahren. Damit durch das Hochfahren des Flux Bay-Deckels 60 kein Falschlufteinbruch in den Ofenraum erfolgt, wird vorher die Tauchwand 68 abgesenkt. Nach dem Abkrätzen wird die Metalloberfläche erneut mit Salz gefluxt, danach der Deckel 60 wieder geschlossen und die Tauchwand 68 hochgefahren. Die Zentrifugalpumpe 58 in der Pumpkammer 54 sorgt für hinreichend hohe Metall-Strömungsgeschwindigkeiten, damit die aus dem Schwelkanal 18 herausgepressten Aluminiumabfälle schnellstmöglich vom flüssigen Aluminium umspült und aufgelöst werden.

Am tiefsten Punkt der Flux Bay 52 befindet sich eine mit einer Stopfenregelung nach dem Stand der Technik versehene Abstichöffnung 69. Der Abstich des Flüssigmetalls kann mehr oder weniger kontinuierlich erfolgen, sodass der Flüssigmetallstand im Ofen keinen allzu grossen Schwankungen unterworfen ist. Der Abstichstrom entspricht der Aluminiumzufuhr aus dem Schwelkanal 18.

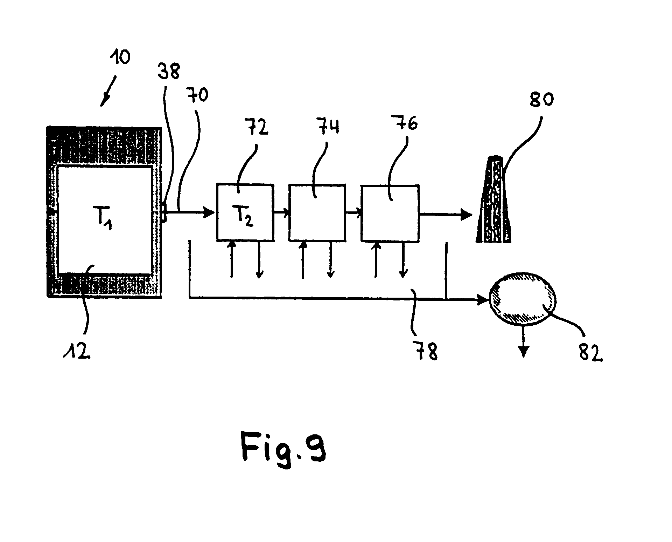

Die Abführung und Reinigung der Ofenabgase ist in Fig. 9 dargestellt. Nach einer Verweilzeit t₁ des Rauchgases im Schmelzherd 12 von mindestens 5 sec bei der Ofenraumtemperatur T₁ von mindestens 1200°C verlässt dieses den Schmelzherd 12. Das über den Abgasstutzen 38 im Gewölbe 16 über dem Schmelzherd 12 abgesaugte Rauchgas wird über eine Abgasleitung 70 einer Quenche 72 zugeführt, in welcher das mindestens 1200°C heisse Abgas in Sekundenbruchteilen auf eine Temperatur T₂ von weniger als 100°C abgekühlt wird. Die Erhitzung der Rauchgase im Schmelzherd 12 auf eine Temperatur T₁ von mindestens 1200°C während einer Verweilzeit t₁ des Rauchgases im Schmelzherd 12 von mindestens 5 sec bewirkt eine vollständige Zerstörung bzw. Zersetzung der verschiedenen Kohlenwasserstoffverbindungen, insbesondere der Dioxine und Furane. Die anschliessend in der Quenche 72 durchgeführte Abschreckung mit Wasser verhindert die Rekombination der aufgespaltenen organischen Verbindungen zu Dioxinen und Furanen.

Der aus der Quenche 72 austretende abgekühlte Abgasstrom wird nachfolgend zum Auswaschen der sauren Gaskomponenten in einen vorzugsweise mit verdünnter Natronlauge betriebenen Gegenstromwäscher 74 eingeleitet. Nach dem Austritt aus dem Gegenstromwäscher 74 erfolgt eine Staubabscheidung in einem mit Wasser betriebenen Venturi-Wäscher 76, aus welchem das derart gereinigte Abgas über einen Kamin 80 in die Atmosphäre abgeleitet wird. Schwermetalle wie beispielsweise Blei, Quecksilber, Zinn, Cadmium und Zink, welche mit den Aluminiumabfällen in die Schmelze gelangt sind, gehen -- soweit sie nicht im flüssigen Aluminium gelöst sind -- bei der Betriebstemperatur des Schmelzofens aufgrund ihres Dampfdrucks ins Abgas über und werden in der wässrigen Stufe, d.h. in der Quenche 72, im Gegenstromwäscher 74 oder im Venturi-Wäscher 76, abgeschieden. Das schadstoffbeladene Abwasser aus der wässrigen Stufe fliesst in ein Sedimentationsbecken 78, in welchem sich die Feststoffe absetzen und später als Schlamm ausgetragen werden. Die aus der Quenche 72, dem Gegenstromwäscher 74 und dem Venturi-Wäscher 76 austretenden Kühl- bzw. Waschflüssigkeiten werden zum überwiegenden Teil aufbereitet und wieder verwendet. Ein Teil des Abwassers wird aus dem Sedimentationsbecken 78 ausgeschleust und zur Behandlung einer Abwasserreinigungsanlage 82 zugeführt.

## Patentansprüche

1. Verfahren zur umweltgerechten Rückgewinnung von Aluminium und Aluminiumlegierungen aus mit organischen Verbindungen behafteten Materialien durch Umschmelzen in einem Schmelzherd (12) und Reinigung der Rauchgase,
dadurch gekennzeichnet,
dass die mit organischen Verbindungen behafteten Materialien in kompaktierter Form direkt in einen im Schmelzherd (12) angeordneten Schwelkanal (18) eingeführt werden und diesen vor dem Eintauchen in die Metallschmelze während einer Zeitdauer (t) von mindestens 3 min durchwandern, wobei die Ofenraumtemperatur (T₁) des Schmelzherdes (12) mindestens 1200°C beträgt, die Rauchgase während einer Verweilzeit (t₁) von mindestens 5 sec bei dieser Temperatur (T₁) gehalten und nach deren Austritt aus dem Schmelzherd (12) auf eine Temperatur (T₂) von weniger als 100°C abgeschreckt werden.

2. Verfahren nach Anspruch 1, dadurch gekennzeichnet, dass die Temperatur (T₁) im Schmelzherd (12) durch Verbrennung der Schwelgase und ggf. zusätzlicher Energieträger mit eingedüstem Sauerstoff erfolgt.

3. Verfahren nach Anspruch 2, dadurch gekennzeichnet, dass der Sauerstoff in einer zur Aufrechterhaltung einer Ofenatmosphäre mit Sauerstoffüberschuss ausreichenden Menge eingedüst wird.

4. Verfahren nach einem der Ansprüche 1 bis 3, dadurch gekennzeichnet, dass die Atmosphäre im Schmelzherd (12) auf Unterdruck geregelt wird.

5. Verfahren nach einem der Ansprüche 1 bis 4, dadurch gekennzeichnet, dass eine Zirkulation des flüssigen Metalls vom Schmelzherd (12) in eine Flux Bay (52) und wieder zurück in den Schmelzherd (12) aufrechterhalten wird.

6. Verfahren nach einem der Ansprüche 1 bis 5, dadurch gekennzeichnet, dass das Abschrecken der Rauchgase mit Wasser durchgeführt wird.

7. Hochleistungsschmelzanlage (10) mit einem Schmelzherd (12) zur umweltgerechten Rückgewinnung von Aluminium und Aluminiumlegierungen aus mit organischen Verbindungen behafteten Materialien, dadurch gekennzeichnet, dass innerhalb des Schmelzherdes (12) ein rohrförmiger Schwelkanal (18) aus feuerfestem Werkstoff mit einer von ausserhalb des Schmelzherdes (12) zugänglichen Eintrittsöffnung (24) zur Einführung der vorgepressten Materialien in den Schwelkanal (18) und einer gegenüber der Eintrittsöffnung (24) tiefer liegenden Austrittsöffnung (26) in Bodennähe des Schmelzherdes (12) angeordnet und die Eintrittsöffnung (24) zumindest zeitweise mit einem Stopfkanal (44) in Verbindung bringbar ist.

8. Hochleistungsschmelzanlage nach Anspruch 7, dadurch gekennzeichnet, dass der Eintrittsöffnung (24) des Schwelkanals (18) eine Presse (42) mit dieser zugehörigem Stopfkanal (44) zugeordnet ist.

9. Hochleistungsschmelzanlage nach Anspruch 8, dadurch gekennzeichnet, dass dem Stopfkanal (44) eine verschiebbare Gegenpressplatte (46) mit einer Oeffnung (48) zum wechselseitigen Pressen und Transportieren der Materialien zugeordnet ist.

10. Hochleistungsschmelzanlage nach einem der Ansprüche 7 bis 9, dadurch gekennzeichnet, dass der Schwelkanal (18) oberhalb des maximalen Metallstandes Entgasungslöcher (29) aufweist.

11. Hochleistungsschmelzanlage nach einem der Ansprüche 7 bis 10, dadurch gekennzeichnet, dass mit dem Schmelzherd (12) eine Flux Bay (52) zur kontinuierlichen Metallbehandlung und eine Pumpkammer (54) mit Metallpumpe (58) zur Aufrechterhaltung der Zirkulation des flüssigen Metalls in Verbindung stehen.

12. Hochleistungsschmelzanlage nach Anspruch 11, dadurch gekennzeichnet, dass am tiefsten Punkt der Flux Bay (52) eine Abstichöffnung (69) zur Entnahme von flüssigem Metall angeordnet ist.

13. Hochleistungsschmelzanlage nach Anspruch 11 oder 12, dadurch gekennzeichnet, dass die Flux Bay (52) mit einem hochfahrbaren Deckel (60) verschlossen ist.

14. Hochleistungsschmelzanlage nach Anspruch 13, dadurch gekennzeichnet, dass am Deckel (60) diesen durchdringende rotierende Impeller (56) festgelegt sind, die zusammen mit dem Deckel (60) hochfahrbar sind.

15. Hochleistungsschmelzanlage nach einem der Ansprüche 11 bis 14, dadurch gekennzeichnet, dass die Flux Bay (52) vom Schmelzherd (12) mittels einer absenkbaren Tauchwand (68) abtrennbar ist.

16. Hochleistungsschmelzanlage nach einem der Ansprüche 7 bis 15, dadurch gekennzeichnet, dass dem Schmelzherd (12) eine Quenche (72) zum Abschrecken der aus dem Schmelzherd (12) austretenden Rauchgase nachgeschaltet ist.

## Claims

1. Process for environmentally-friendly recovery of aluminium and aluminium alloys made of materials containing organic compounds, by recasting in a smelting hearth (12) and cleaning of the flue gases,
characterised in that
the materials containing organic compounds are introduced in compacted form directly into a carbonizing duct (18) arranged in the smelting hearth (12) and these circulate for a period of time (t) of at least 3 minutes before immersion in the metal melt, where the oven temperature (T₁) of the smelting hearth (12) is at least 1200°C, the flue gases are held at this temperature (T₁) for a waiting time (t₁) of at least 5 seconds and after their exit from the smelting hearth (12) can be quenched to a temperature (T₂) of less than 100°C.

2. Process according to claim 1, characterised in that the temperature (T₁) in the smelting hearth (12) is maintained by the burning of low temperature carbonization gas and if necessary additional energy carriers with injected oxygen.

3. Process according to claim 2, characterised in that the oxygen is injected in sufficient quantities to maintain an oven atmosphere with excess oxygen.

4. Process according to any of claims 1 to 3, characterised in that the atmosphere in the smelting hearth (12) is maintained at reduced pressure.

5. Process according to any of claims 1 to 4, characterised in that a circulation of the molten metal is maintained from the smelting hearth (12) into a flux bay (52) and then back into the smelting hearth (12).

6. Process according to any of claims 1 to 5, characterised in that the quenching of the flue gases takes place using water.

7. High performance smelting plant (10) with a smelting hearth (12) for the environmentally-friendly recovery of aluminium and aluminium alloys from materials containing organic compounds, characterised in that inside the smelting hearth (12) is fitted a tubular carbonizing duct (18) made of a fire resistant material with a inlet opening (24) accessible from outside the smelting hearth (12) for the introduction of the rough pressed materials into the carbonizing duct (18) and with an outlet opening (26) lying lower than the inlet opening (24) in the vicinity of the floor of the smelting hearth (12), and the inlet opening (24) can be connected at least temporarily to a stuffing duct (44).

8. High performance smelting plant according to claim 7, characterised in that the inlet opening (24) of the carbonizing duct (18) is connected to a press (42) with the integral stuffing duct (44).

9. High performance smelting plant according to claim 8, characterised in that the stuffing duct (44) is fitted with a moveable mating press plate (46) with an opening (48) for the reciprocal pressing and transporting of materials.

10. High performance smelting plant according to any of claims 7 to 9, characterised in that the carbonizing duct (18) has degassing holes (29) above the maximum metal level.

11. High performance smelting plant according to any of claims 7 to 10, characterised in that connected to the smelting hearth (12) are a flux bay (52) for continuous metal processing and a pump chamber (54) with a metal pump (58) for maintaining the circulation of the molten metal.

12. High performance smelting plant according to claim 11, characterised in that a tapping hole (69) is located at the deepest point of the flux bay (52) for the extraction of molten metal.

13. High performance smelting plant according to claim 11 or 12, characterised in that the flux bay (52) is closed by a raisable cover (60).

14. High performance smelting plant according to claim 13, characterised in that on the cover (60) are arranged rotating impellers (56) which pass through this and which can be raised together with the cover (60).

15. High performance smelting plant according to any of claims 11 to 14, characterised in that the flux bay (52) can be separated from the smelting hearth (12) by means of a lowerable submerged wall (68).

16. High performance smelting plant according to any of claims 7 to 15, characterised in that a quencher (72) for quenching the flue gases released from the smelting hearth (12) is fitted after the smelting hearth (12).

## Revendications

1. Procédé de récupération non polluante d'aluminium et d'alliages d'aluminium, à partir de matières auxquelles adhèrent des composés organiques, par raffinage dans un fourneau de fusion (12) et épuration des gaz de fumées,
caractérisé en ce que les matières auxquelles adhèrent des composés organiques sont directement introduites sous forme compactée dans un canal de carbonisation (18) agencé dans le fourneau de fusion (12) et parcourent ce canal pendant un laps de temps (t) d'au moins trois minutes avant d'être plongées dans le bain métallique, la température (T₁) de l'espace de four du fourneau de fusion (12) atteignant au moins 1200°C, les gaz de fumées étant maintenus à cette température (T₁) pendant un temps de séjour (t₁) d'au moins 5 secondes et étant refroidis brusquement à une température (T₂) inférieure à 100°C après leur sortie du fourneau de fusion (12).

2. Procédé selon la revendication 1, caractérisé en ce que la température (T₁) est atteinte dans le fourneau de fusion (12) par combustion, avec de l'oxygène injecté, des gaz de carbonisation et éventuellement de porteurs d'énergie additionnels.

3. Procédé selon la revendication 2, caractérisé en ce que l'oxygène est injecté selon un débit suffisant pour maintenir un excès d'oxygène dans l'atmosphère du four.

4. Procédé selon l'une des revendications 1 à 3, caractérisé en ce que l'atmosphère du fourneau de fusion (12) est régulée de manière à être en dépression.

5. Procédé selon l'une des revendications 1 à 4, caractérisé en ce qu'une circulation du métal fluide est maintenue, du fourneau de fusion (12) vers une Flux Bay (52), et de celle-ci en retour vers le fourneau de fusion (12).

6. Procédé selon l'une des revendications 1 à 5, caractérisé en ce que le refroidissement brusque des gaz de fumées est effectué à l'eau.

7. Installation de fusion (10) à haut débit comportant un fourneau de fusion (12) pour la récupération non polluante d'aluminium et d'alliages d'aluminium à partir de matières auxquelles adhèrent des composés organiques, caractérisée en ce qu'un canal tubulaire de carbonisation (18) en matériau réfractaire, qui comporte une ouverture d'entrée (24) accessible de l'extérieur du fourneau de fusion (12) pour introduire dans le canal de carbonisation (18) les matériaux comprimés au préalable et une ouverture de sortie (26) située plus bas que l'ouverture d'entrée (24), est agencé au voisinage du fond du fourneau de fusion (12) et l'ouverture d'entrée (24) peut être mise au moins temporairement en liaison avec un canal tampon (44).

8. Installation de fusion à haut débit selon la revendication 7, caractérisée en ce qu'une presse (42), pourvue du canal tampon (44) qui lui est raccordé, est associée à l'ouverture d'entrée (24) du canal de carbonisation (18).

9. Installation de fusion à haut débit selon la revendication 8, caractérisée en ce qu'une plaque de contre-pression mobile (46) qui comporte une ouverture (48) est associée au canal tampon (44) pour permettre en alternance une compression et un transport des matériaux.

10. Installation de fusion à haut débit selon l'une des revendications 7 à 9, caractérisée en ce que le canal de carbonisation (18) comporte des orifices de dégazage (29) au-dessus du niveau maximal du métal.

11. Installation de fusion à haut débit selon l'une des revendications 7 à 10, caractérisée en ce qu'une Flux Bay (52) destinée au traitement continu des métaux et une chambre (54) de pompe pourvue d'une pompe (58) à métal sont en liaison avec le fourneau de fusion (12) pour maintenir la circulation du métal liquide.

12. Installation de fusion à haut débit selon la revendication 11, caractérisée en ce qu'une ouverture de percée (69) est agencée au point le plus bas de la Flux Bay (52) pour le prélèvement de métal liquide.

13. Installation de fusion à haut débit selon la revendication 11 ou 12, caractérisée en ce que la Flux Bay (52) est fermée au moyen d'un couvercle relevable (60).

14. Installation de fusion à haut débit selon la revendication 13, caractérisée en ce que des agitateurs tournants (56) à ailes sont fixés sur le couvercle (60) et le traversent et sont relevables en même temps que le couvercle (60).

15. Installation de fusion à haut débit selon l'une des revendications 11 à 14, caractérisée en ce que la Flux Bay (52) peut être séparée du fourneau de fusion (12) au moyen d'une paroi plongeante (68) qui peut être abaissée.

16. Installation de fusion à haut débit selon l'une des revendications 7 à 15, caractérisée en ce qu'un dispositif de refroidissement brusque (72) est monté en aval du fourneau de fusion (12) pour refroidir brusquement les gaz de fumées qui sortent du fourneau de fusion (12).
